# EUROPEAN PATENT APPLICATION

(11) **EP 4 734 076 A1**
(43) Date of publication of application: **29.04.2026**
(21) Application number: 24306814.5
(22) Date of filing: 28.10.2024
(51) Int. Cl.: G06V 20/20, G06V 10/44, G06V 10/82, G06V 20/40, G06V 40/10, G06V 40/16, G06V 40/20

(54) **MASSAGE ASSISTANCE**

(71) Applicant: Chanel Parfums Beauté, 92200 Neuilly-sur-Seine (FR)
(72) Inventor: LORIETTE, Jonathan, 92521 Neuilly Sur Seine (FR); ZHANG, Samson, 92521 Neuilly Sur Seine (FR); VANDENBUSSCHE, Vincent, 91400 Orsay (FR)
(74) Representative: Plasseraud IP

(57) **Abstract**

Assisting a person to perform a face massage action. comprising tracking facial and/or neck landmarks and hand landmarks in a video of the person; superposition on the user's face a trajectory of a target massage motion and an indicator evolving following the motion along the trajectory.

## Description

### BACKGROUND

A beauty treatment, for example a massage, may require performing complex and specific actions. Hence, in the process of a beauty treatment, a person may need assistance for carrying out the different actions to be performed.

The present disclosure improves the current situation.

### BRIEF DESCRIPTION OF THE DRAWINGS

**Figure 1** schematically illustrates an example of a system according to the present disclosure.
**Figure 2** schematically illustrates an example of a method according to the present disclosure.
**Figure 3** schematically illustrates another example of a method according to the present disclosure.
**Figure 4** schematically illustrates yet another example of a method according to the present disclosure.
**Figure 5** schematically illustrates yet another example of a method according to the present disclosure.
**Figure 6** schematically illustrates yet another example of a method according to the present disclosure.
**Figure 7a** schematically illustrates an example of a first image of a video flux in which information for assisting massage has been generated.
**Figure 7b** schematically illustrates an example of a second image of a video flux in which information for assisting massage has been generated.
**Figure 7c** schematically illustrates an example of a third image of a video flux in which information for assisting massage has been generated.
**Figure 8** schematically illustrates another example of an image of a video flux in which information for assisting massage has been generated.
**Figure 9** schematically illustrates an example of an image of a video flux in which two curves and two indicators according to the present disclosure have been generated.
**Figure 10** schematically illustrates yet another example of a method according to the present disclosure.
**Figure 11** schematically illustrates an example of an architecture of a machine learning system according to the present disclosure.
**Figure 12** schematically illustrates yet another example of a method according to the present disclosure.

### DETAILED DESCRIPTION

The disclosure applies to a method for assisting a person performing a massage using virtual information applied on a facial image of a person captured by a camera.

In the area of beauty treatment assistance using virtual information, the inventors have only found solutions for assisting makeup, but not for assisting massages, such that the present disclosure proposes a solution of assistance for another type of beauty treatment.

Moreover, the solutions found by the inventor with respect to the makeup assistance with virtual information present inconvenience.

Indeed, the solutions found by the inventor are based on a processing device with a camera (for example smartphones, tablets or computers) acquiring an image of a face of the person, and displaying virtual areas of makeup in the acquired image of the visage of the person for assisting this person during the makeup process.

However, makeup assistance solutions do not consider the effective movements performed by the person when realizing its makeup, i.e. does not consider the movements of the hands of the person realizing an action of makeup. Hence, these solutions only provide the person with a makeup zone in which an action can be applied, but do not help the person to indeed apply the makeup in this zone.

In addition to the previous point, in these solutions, a 3D model of a virtual area of makeup is superimposed in the 3D model of the face of the person to indicate to the person the location for the makeup. The fact that the 3D model of the area to makeup should be superimposed implies that the model should be stored, which therefore requires adapted capacity storage for the processing device. Then, during the makeup assistance process, a superimposed 3D model should also be loaded by the processing device to be superimposed to the acquired video frame, which requires a loading time proportional to the size of the 3D model. That is, when the 3D model should be processed in real time for providing makeup assistance to the person in real time, it may cause inconvenience due to processing time for loading. Besides tracking real time interaction between a 3D model and user's hands can be challenging.

The present disclosure therefore presents a solution which assists a person during a massage by providing a smooth path or a curve such as B-spline, especially Bezier curve, NURBS - Non-Uniform Rational B-Spline - or Catmull-Rom curve, in an image of the visage of the person acquired by the camera, therefore guiding the person for applying an action of massage in a given area of its face, while tracking a hand of the person such that an indicator is moving following a trajectory parallel to the curve based on a distance between this indicator and a position of a hand of the person. The curve may therefore define a trajectory to be followed by a hand in the face of the person to perform an action of massage, and the indicator allows defining an advancement and a direction on this trajectory. Since the curve is not an image, and can be generated based on a settings file, the storage capacity of the processing device can be reduced, as well as the time to load the settings file allowing generating the curve, which is particularly adapted for real-time assistance.

Hence, the present solution provides a new type of assistance using virtual information generated on a face image of a person in beauty treatments, which corresponds to a solution for assisting a person to perform a massage. The solution of the present disclosure at least reduces the inconvenience in terms of storage and in terms of computing time compared to assistance based on a superimposed image, and allows the person to be guided in its gestures for applying the massage by providing an indicator moving along the curve depending on a position of its hands.

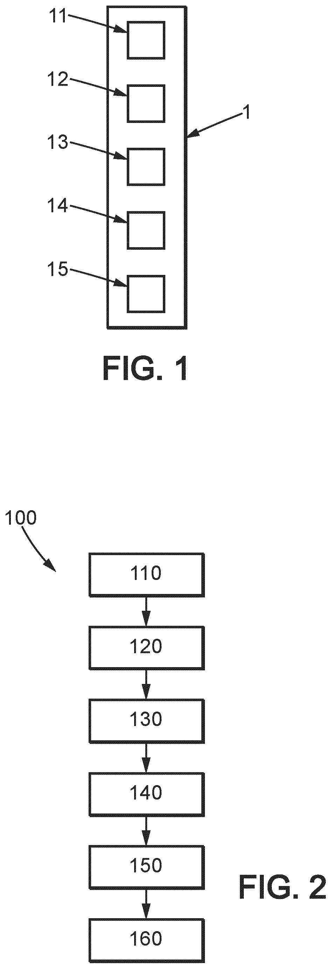

With reference to figure 1, it is presented an example of a system 1 allowing implementing the solution.

As illustrated in figure 1, the system 1 comprises a processor 11, a memory 12, and a camera 13.

The memory 12 may correspond to a non-transitory machine-readable or a computer readable storage medium. The memory 12 according to this disclosure may be any electronic, magnetic, optical or other physical storage device that stores executable instructions. The memory 12 may for example comprise at least one of a Random Access Memory (RAM), a flash memory, a storage drive, an optical disk, or other appropriate technologies allowing to store data.

The memory 12 is configured to store a video flux recorded by the camera.

In some examples, the memory 12 may be encoded with instructions executable by a processor such as the processor 11. The memory 12 may comprise instructions to operate the processor 11 to perform any of the examples of the method 100 hereby described.

The processor 11 has access to the information stored in the memory 12.

The camera 13 is configured to acquire a video flux. A video flux may be defined as a plurality of successive images, which may also be referred to as frames. The camera 13 may be integrated to the system 1, or may be a peripheral. The peripheral may be plugged to be connected to the memory 12 of the system 1, so that the images recorded by the camera 13 are stored in the memory 12.

In some examples, the system 1 may comprise a screen 14 for displaying information.

In some examples, the system 1 may comprise an audio system 15. The audio system 15 may be configured to play audio signals, for example audio messages as detailed below.

In some examples, the system 1 may correspond to a smartphone or a tablet. In some other examples, the system 1 may correspond to a computer, for example a laptop, or a desktop computer.

It is now presented with reference to figures 2 to 6, 10 and 12 different examples of methods 100 for assisting a person to perform a massage action. A massage may be defined as a practice that involves pressing and rubbing muscles, pinching the skin, or rotating the skin with a pinch. A massage may comprise a unique massage action or a plurality of massage actions. A massage action may be defined as a gesture, for example a hand gesture, to be performed on a given area of a person. The examples of methods 100 are presented for a unique massage action, but the same principles may be applied for each massage action of a massage comprising several massage actions. The examples of methods 100 may for example be implemented by the processor 11 of the system 1.

The examples of methods 100 allow a person to be assisted to perform a massage action on at least one of its neck or its face. As previously explained, the examples of methods 100 uses virtual information to guide the person during the massage.

It should be noted that the example of methods 100 illustrated in the figures are merely an illustration of examples of process representing, by means of blocks, the various operations that may be included in the process and described in the remainder of the document. As such, this illustration does not reflect any seriality between operations. In other words, the operations described with reference to the methods 100 illustrated in the figures are not necessarily implemented one after the other, and may in particular be implemented in a different order from the ones shown in the figures, or be implemented in parallel, unless when a given operation needs an output from another operation to be implemented. Similarly, it is not necessary for each operation to be implemented once before that a same operation could be performed a second time. The frequency of implementation of each operation is specific to it and is not necessarily linked to the implementation of the other operations.

As illustrated in block 110, the method 100 comprises obtaining a video flux. The video flux obtained in block 100 comprises images with at least one of a face, a neck, or a hand of the person. The video flux may for example comprise images with a portion of at least one of a face, a neck, or a hand of the person. Indeed, a hand, a face, or a neck in an image may for example be cropped in images. A hand in an image may also occlude a portion of the neck and/or a portion of the face in the image. Any fingers or parts of a hand, as well as the face, can occlude any parts of the hand in the image.

The video flux may for example be acquired by the camera 13 of the system 1. The video flux may be stored in the memory 12 of the system 1, so that the processor 11 can obtain the images Im of the video flux by reading the memory 12.

As illustrated in block 120, the method 100 comprises tracking landmarks belonging to at least one of a face or a neck of the person in the video flux.

A landmark may be defined as a specific point of the area to which it belongs. A landmark may therefore be defined by its coordinates in an image of the video flux.

A landmark belonging to the face of the person will be hereinafter referred to as a face landmark. A landmark belonging to the neck of the person will be hereinafter referred to as a neck landmark.

Tracking a landmark in the video flux may be defined as determining coordinates of the landmark in successive images Im of the video flux, and preferably in each image of the video flux comprising the point represented by the landmark.

Hence, in block 120, the method 100 may comprise determining coordinates of at least one of face landmarks or neck landmarks in successive images Im of the video flux.

In the present disclosure, neck landmarks may be tracked since some massages may also be performed, at least partially, in the neck area.

In some examples, neck landmarks can be jointly tracked with face landmarks. The necks landmarks may be tracked with face landmarks for example based on a machine learning model identifying and tracking both neck and face landmarks. In these examples, a machine learning model configured to detect and track face landmarks may for example be trained to also detect and track neck landmarks.

It should however be noted that a neck does not really comprise salient features which can be detected by classical computer-vision techniques. Indeed, the neck area is a homogeneous area, at least in terms of color intensity. That is, a neck area in an image does not comprise important intensity gradients which may be used to detect salient features of the neck, and which, at the end, may be used to determine neck landmarks. The inventors therefore propose an ingenious method to determine and eventually to track neck landmarks based on face landmarks. The method especially proposes to determine a given neck landmark based on a symmetry operation applied on a given face landmark. Since many techniques can be used to track face landmarks and obtaining, for images of a video flux, coordinates of the face landmarks, coordinates of the neck landmarks may be computed in these images based on the coordinates of the face landmarks, such that coordinates of neck landmarks may be determined and tracked in images of the video flux.

In some examples, a given neck landmark may be determined as corresponding to a point of symmetry of a given face landmark with respect to a point (hereinafter referred to as "central symmetry point"), or with respect to an axis (hereinafter referred to as "symmetry axis"). We understand that, although these examples are proposed to determine a given neck landmark, each neck landmark may be determined based on the same technique. We also understand that a different central symmetry point, or a different symmetry axis may be used to determine a different neck landmark, and that a different face landmark may also be used to determine a different neck landmark. A symmetry axis may for example be determined based on coordinates of two face landmarks, especially two face landmarks belonging to a chin of the person. A symmetry axis may for example be an axis passing through two face landmarks. A central symmetry point may for example correspond to a chin landmark. The symmetry with respect to a central symmetry point may also be called point reflection in the literature.

In some examples wherein a given neck landmark is determined in an image of the video flux based on a symmetry operation, a color of a pixel in the image corresponding to the given neck landmark may be determined to verify whether the determined color corresponds to a color of a skin of the person. If not, the given neck landmark may not be considered. Indeed, since the given neck landmark is determined by symmetry on the image, and not by identifying a salient feature of the neck in the image (as for face landmarks), testing whether a pixel corresponding to the given neck landmark in the image presents the color of the skin of the person allows reducing a probability of determining a given neck landmark outside of the neck of the person.

In block 120, when the massage action to be performed by the user does not involve a face area, the face landmarks may not be tracked. When the massage action to be performed by the person does not involve a neck area, the neck landmarks may not be tracked. That is, the block 120 of tracking landmarks belonging to at least one of a face or a neck of the person in the video flux may track at least one of face landmarks or neck landmarks depending on the massage action to be performed by the user.

As illustrated in block 130, the method 100 comprises tracking landmarks belonging to a hand of the person in the video flux. A landmark belonging to the hand of the person will be hereinafter referred to as a hand landmark.

In some examples, both hands may be tracked in the video flux when the video flux comprises images with both hands of the person. When the processor 11 tracks hand landmarks, the processor 11 may therefore determine, for images Im of the video flux comprising hands, coordinates of the hand landmarks in these images.

As illustrated in block 140, the method 100 comprises determining points of a curve C, and especially coordinates of points of the curve C (points coordinates of the curve hereinafter). The curve C corresponds to a trajectory to be performed by a hand of the person for the massage action. The curve C may for example correspond to a B-spline, especially a Bezier curve, a NURBS or a Catmull-Rom curve. The curve may for example be built based on Berstein polynomials.

Points of the curve C may be determined based on at least one of neck landmarks or face landmarks in the video flux. Points of the curve C are therefore determined based on the tracked landmarks at block 120, which may be dependent on the massage action. A starting point of the curve C may for example be determined based on a first landmark belonging to a face or to a neck of the person. An ending point of the curve C may for example be determined based on a second landmark belonging to a face or to a neck of the person. More information about first and second landmarks will be detailed below.

Points coordinates of the curve C may for example be determined based on coordinates of at least one of face landmarks or neck landmarks in the video flux. Points of the curve C are therefore determined based on the tracked landmarks at block 120, which may be dependent on the massage action.

The purpose of the curve C is to guide the person in its application of a gesture of the massage (i.e. in its application of the massage action), such that when the curve is generated in the video flux, as detailed below, the person can directly understand where the massage should be performed. However, since the person moves during the application of the massage, the curve C should also move with the person to conserve the correct location with respect to the person. Hence, points coordinates of the curve may be determined based on the coordinates of at least one of face landmarks or neck landmarks in the successive images Im of the video flux to conserve the right position in the area to be massaged by the person in the video flux.

It should be noted that if the massage should be applied on the face area of the person, coordinates of the neck landmarks may not be necessary to determine the curve C. Alternatively, if the massage should be applied on the neck area of the person, coordinates of the face landmarks may not be necessary to determine the curve C. In some examples where the massage should be applied on both the neck and the face area, coordinates of both face and neck landmarks may be used to determine the points coordinates of the curve C.

As illustrated in block 150, the method 100 comprises determining a position of an indicator IND in relation to the curve C. The indicator IND may correspond to any graphic element indicating a location in an image. The position of the indicator IND is defined with respect to the curve in the video flux, and may especially be defined with respect to a point of the curve C in a given image of the video flux.

The position of the indicator IND evolves following a trajectory significantly parallel to the C curve in the video flux. The position of the indicator IND is determined based on coordinates of a specific hand landmark sHL in the video flux.

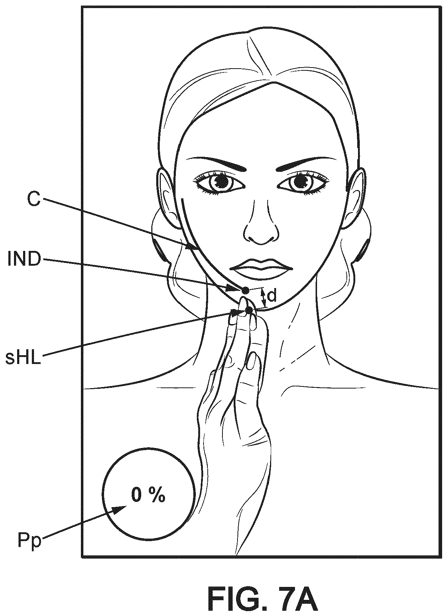

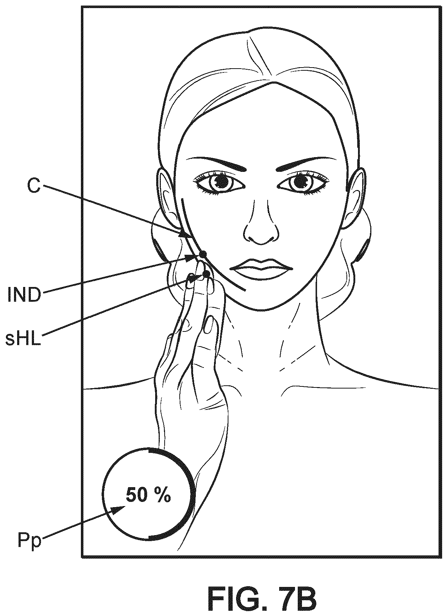

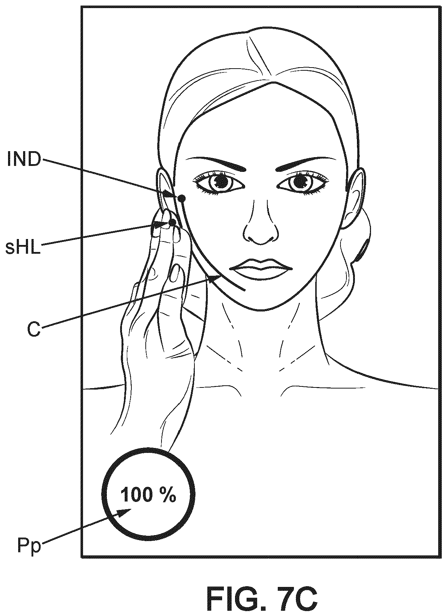

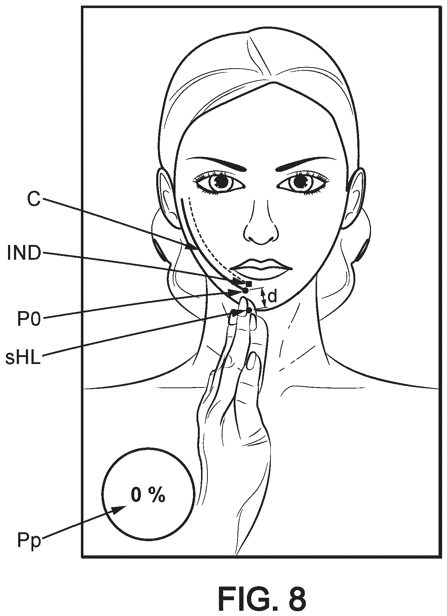

An indicator IND evolving following a trajectory significantly parallel to the curve in the video flux means that the indicator IND, when moving in the different images Im of the video based on coordinates of the specific hand landmark sHL in the video flux, is set at different positions belonging to the curve C or is set at different positions aside the curve, but the different positions aside the curve C present a parallel trajectory to the curve C. Figures 7a, 7b and 7c represent the alternative wherein the indicator is set at different positions along the curve. Figure 8 represents the alternative wherein the indicator is set an initial position aside the curve, and will follow the trajectory represented by the dotted line aside the curve.

In some examples, the position of the indicator IND evolves by following the trajectory of the curve in the video flux in a direction corresponding to the direction of the massage action. Since the position of the indicator IND evolves following a parallel trajectory of the curve based on the position of a hand landmark of the person, the position of the indicator provides an accurate guidance to the person with respect to the position of its hands to perform the massage action, and especially to a direction of the massage action.

We understand that the specific hand landmark sHL which allows moving the indicator IND depends on the massage action to be performed. That is, any landmarks of a hand of the person may correspond to the specific hand landmark sHL. The specific hand landmark may therefore be determined depending on the massage action to be performed by the person. In some examples, the specific hand landmark sHL may correspond to a hand landmark associated with a fingertip of the person, as illustrated in the figures 7a, 7b, 7c, 8 and 9. In some other examples, the specific hand landmark sHL may correspond to a hand landmark associated with a phalanx of the hand, and especially associated with a proximal phalanx of the hand. In yet some other examples, the specific hand landmark sHL may correspond to a hand landmark associated with a palm of the hand.

The indicator IND may for example present a geometrical form, like a circle or a square. The indicator may for example present the form of an arrow oriented to indicate a direction of a trajectory of the curve, corresponding to the trajectory of the hand of the user to perform the massage action.

The indicator allows guiding the person performing the massage by moving following a parallel trajectory of the curve with respect to the position of a specific area of the hand of the person (represented by the specific hand landmarks) which should be used to perform the massage action. Especially, when the specific hand landmark is close to a point of the curve C in a given image of the flux video, the position of the indicator may be determined to move to a next position in the next image, as explained below.

As illustrated in block 160, the method 100 comprises generating the curve C and the indicator IND in the video flux. That is, the curve and the indicator are generated in images Im of the video flux such that the person can see the curve and the indicator providing the guidance of the massage. Generating the curve and the indicator on the video flux may comprise modifying intensities of pixels associated with a location of the curve points and of the indicator in the video flux in order to display a modified video flux. The modified video flux 14 may for example be displayed in the screen 14. More specifically, the curve C and the indicator IND can be generated in each image of the video flux in which they are determined. We understand that the curve and the indicator cannot be generated in images Im of the video flux in which the person is no more present.

It has to be noted that compared to a full 3D model of a mask which may comprise hundreds of 3D points to be accurate, and wherein each 3D point should be recomputed at each frame of the video flux to fit with the face of the person, determining the points of the curve C and the position of the indicator IND in images of the video flux consumes less computing resources, which therefore allows providing a smooth guidance in the video flux.

Hence, the method 100 of the present disclosure allows guiding a person during a massage based on virtual information, and especially based on a curve C which corresponds to a trajectory to be performed by a hand of the person for the massage, and based on an indicator IND which evolves with the position of the hands relatively to the curve, therefore dynamically helping the person to determine a direction and an advancement of the massage.

In some examples, the specific hand landmark sHL may be displayed in images of the video flux in which it is present. This allows providing to the user with information regarding which point of the hand should specifically be applied for the massage action.

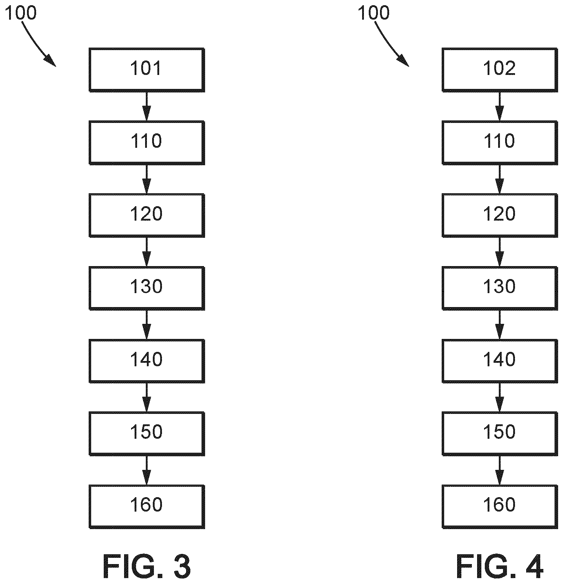

In some examples illustrated in figure 3, the method 100 may comprise a block 101 of obtaining an information identifying the massage action. In these examples, a man-machine interface (not illustrated) may for example be used by a user of the system 1 to select a massage, or to directly select a massage action that the person will be performed. The information identifying a massage action may be stored in the memory 12 such that the processor 11 can retrieve it by reading the memory 12.

In some examples illustrated in figure 4, the method 100 may comprise a block 102 of loading a settings file associated to the massage action. The settings file may for example correspond to a text file or a binary file. The settings file is loaded from a memory, for example from the memory 12, of the system 1. The settings file may for example be associated with a whole massage comprising the massage action in the memory 12. That is, several settings files may be stored in the memory 12, and each settings file may be associated in the memory 12 with a respective massage. Alternatively, the settings file may be associated with a massage action. That is, several settings files may be stored in the memory 12, and each settings file may be associated in the memory 12 with a respective massage action. In examples comprising the block 101, the settings file may be loaded by the processor 12 following the obtention of the information identifying the massage action.

A settings file may therefore comprise information regarding:
- coordinates of a starting point of the curve relative to a first landmark of a face or a neck;
- coordinates of an ending point of the curve relative to a second landmark of a face or a neck; and
- control points of the curve.

By coordinates of a point of the curve C relative to a given (first or second here) landmark, the present disclosure means that the coordinates of the point of the curve C may be determined based on the coordinates of the given landmark in an image. That is, when tracking face and/or neck landmarks in the video flux, the coordinates of these landmarks are determined and tracked in images Im of the video flux, so that it can be determined the coordinates of the point of the curve relatively to the coordinates of the landmark in images Im of the video flux.

By control points, the present disclosure referred to a known notion of points allowing generating curves, for example B-splines, Bezier curves, NURBS or Catmull-Rom curves. These types of curves are currently proposed by drawing software.

A curve C may therefore be defined by a starting and an ending point, which are respectively associated in the settings file to a given landmark, and by control points allowing determining the other points of the curve.

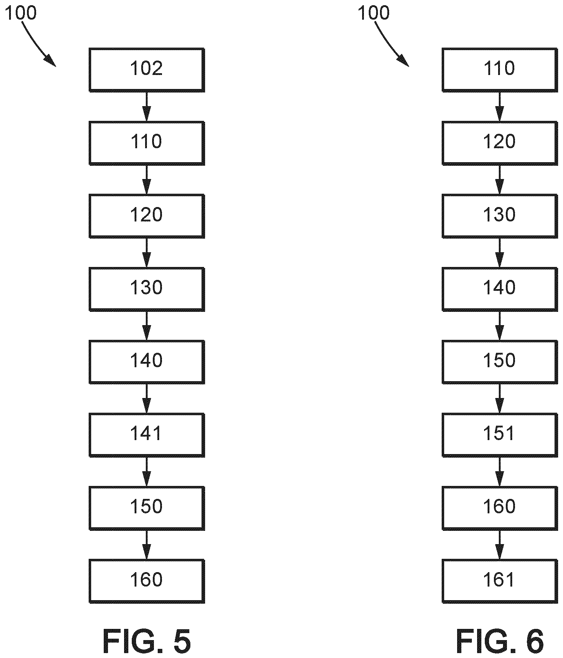

In the examples comprising the block 102, the block 140 of determining the curve to be generated in images Im of the video flux may further comprise a block 141. The block 141 may correspond to determine coordinates of points of the curve in images Im of the video flux based on the information stored in the settings file and based on coordinates of at least one of face landmarks or landmarks in the video flux. Indeed, since the face and/or neck landmarks are tracked in images Im of the video flux, the coordinates of these landmarks in images Im of the video flux are known (especially the coordinates of the first and second landmarks), such that a curve may be generated on images Im of the video flux based on these coordinates and on the information stored in the settings file. These examples of methods 100 are schematically illustrated in figure 5.

Since the specific hand landmark sHL may be determined based on the massage action to be performed, a settings file associated with the massage comprising the massage action (or a settings file directly associated with the massage action), may comprise a hand index value identifying the specific hand landmark sHL among the hand landmarks.

In some examples, an initial position of the indicator in the video flux may be determined based on the coordinates of the starting point of the curve. More precisely, the indicator IND may evolve from an initial position to a final position. In examples wherein the position of the indicator IND evolves along (and not aside) the curve, the initial position of the indicator may correspond to the position of the starting point of the curve, as illustrated in figure 7a. In examples wherein the position of the indicator IND evolves along (and not aside) the curve, the final position of the indicator may correspond to the ending point of the curve, as illustrated in figure 7c.

In a first option, a position of the indicator IND following a trajectory significantly parallel to the curve C evolves from a first position in a first image of the video flux to a second position in a second image of the video flux, successive to the first image, when a distance d between the specific hand landmark and the indicator in the first image is less than a first threshold. Hence, we understand that when the specific hand landmark sHL is near the position of the indicator in an image of the video flux, the position of the indicator evolves in the next image, such that when the specific hand landmark sHL follows the movement of the indicator relatively to the curve, the specific hand landmark sHL (i.e. a specific point of a hand of the person) follows the curve, and performs the massage action.

In a second option, a position of the indicator following the trajectory of the curve evolves from a first position in a first image of the video flux to a second position in a second image of the video flux, successive to the first image, when a distance d between the specific landmark of the hand and a point of the curve in the first image is less than a second threshold. The second threshold may be equal to the first threshold. The second option may for example allow having the indicator located aside of the curve to follow the trajectory of the curve aside of the curve when the specific hand landmark of the hand of the person follows the curve, in order to perform the massage action.

In some examples illustrated in figure 6, the method 100 may comprise a block 151 of determining a progress parameter Pp based on a position of the indicator IND. The progress parameter Pp is determined to indicate an advancement of the massage action. The progress parameter may comprise a numerical parameter, for example a percentage. The progress parameter may then be displayed on images Im of the video flux, as illustrated by block 161 in the figure 6. The progress parameter Pp may therefore be displayed on the screen 14. The progress parameter Pp is for example illustrated in the figures 7a, 7b 7c, 8 and 9.

The figures 7a, 7b and 7c represent each a schematic example of an image of the video flux displayed on a screen and comprising the curves C, the indicator IND, and the parameter of progress Pp. In these figures, the indicator IND evolves along the curve C and the specific hand landmark sHL is also displayed on the screen.

The figure 7a illustrates a schematic example of a first image of the video flux in which the generated information has been added. Here, the indicator IND is illustrated in the form of a circle and is set at an initial position corresponding to a starting point of the curve C. That is, the person has not started yet to perform the massage action. The fact that the massage action has not been started by the person is also illustrated by the parameter of progress Pp. Here, the parameter of progress Pp comprises a percentage equal to 0 since the indicator IND is positioned as its starting position.

The figure 7b illustrates a schematic example of a second image of the video flux in which the generated information has been added. In this figure, the indicator IND is positioned at the middle of the curve, between its initial and its final position, so that the parameter of progress Pp comprises a percentage set at 50%. That is, a hand of the person, and especially the specific hand landmark sHL of a hand of the person, has been moved by the person in its face following the trajectory of the curve C, and close enough to the curve C so that the position of the indicator IND has moved from the initial position (illustrated in figure 7a) to reach the middle position.

Finally, the figure 7c illustrates a schematic example of a third image of the video flux in which the generated information has been added. In the figure 7c, the indicator IND is positioned at its final position. That is, the specific hand landmark sHL of a hand of the person has been moved by the person in its face following the trajectory of the curve C and close enough to the curve C along the whole curve C so that the position of the indicator IND has moved from the initial position (illustrated in figure 7a) to the final position (therefore passing by the middle position illustrated in figure 7b). In other words, the person has performed the complete massage action. Hence, the parameter of progress Pp comprises a percentage set at 100%.

We understand that between the initial and the final positions of the indicator IND, the indicator IND may take many positions (and not just a middle position as illustrated in figure 7b) along the curve C. As explained above, in some examples, the indicator IND may evolve from a first position (for example the initial position in figure 7a) in a first image to a second position in a second image, successive to the first image, if the distance d between the specific hand landmark sHL and the indicator in the first image is less than the first threshold.

It is also represented in figure 8 the alternative wherein the indicator IND evolves aside the curve, following a trajectory parallel to the curve C. In this figure, the indicator IND is illustrated in the form of a square and is set at an initial position. The initial position may be determined based on a starting point P0 of the curve C. The parallel trajectory aside the curve C is illustrated in the dotted line in figure 8. As explained above, in some examples, the indicator IND may evolve from a first position (for example the initial position in figure 8) in a first image to a second position in a second image, successive to the first image, if the distance d between the specific hand landmark sHL and a point of the curve (for example P0 in figure 8) is less than the second threshold. We understand that in a second image, the distance d computed to determine whether the indicator IND should move to a third position in a next image of the video flux may correspond to the distance between the specific hand landmark sHL, and another point of the curve C than the starting point P0, for example a first point of the curve P1 (not represented). In other words, an index of a point of the curve C used for determining the distance d may be incremented when a position of the indicator IND moves from a given position to a next position in a next image.

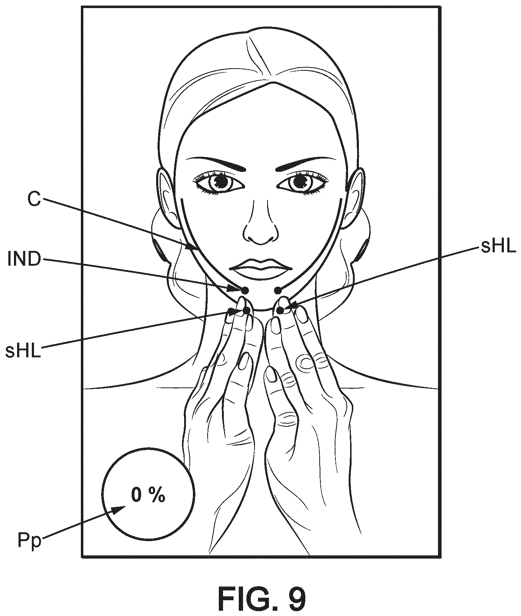

We also understand that several curves C and indicators IND may be determined and generated to perform a massage action. In some examples wherein the massage action requires the use of two hands, two curves C and two indicators IND may specifically be determined and generated in images Im of the video flux. These examples are for example illustrated in figure 9 wherein the indicators IND are represented to evolve along their respective curve, but they could also be represented as moving aside their respective curve, as in figure 8. In these examples, a specific hand landmark sHL of each hand may be tracked and the evolution of the position of the indicators may be based on a respective specific hand landmark sHL.

In examples wherein the indicator IND evolves along the curve C, the indicator IND may take all the positions of the points of the curve C in different images Im of the video flux. In some examples, an index i of a curve point associated with a current position of the indicator IND in a given image of the video flux may be incremented (i = i+n wherein n in a natural number) for the next image of the video flux when a distance d between the specific hand landmark sHL and the curve point associated to the index is below the second threshold in the given image. That is, in the next image, the position of the indicator will correspond to the position of the curve point with an index i+n.

In some examples, the block 120 of tracking, in the video flux, at least one of neck or face landmarks may comprise a block 121 of selecting a subpart of images comprising at least one of a face or a neck of the person in images Im of the video flux for obtaining a first plurality of subpart images Sim1 of the video flux. In some examples, selecting a subpart of an image comprising at least one of a face or a neck of the person in images Im of the video flux may comprise, for a given image of the video flux comprising at least one of a face or a neck, determining a bounding box comprising at least one of a face or a neck in the given image, and selecting the bounding box of the given image as corresponding to the subpart of the given image. In some other examples, selecting a subpart of an image comprising at least one of a face or a neck of the person in images Im of the video flux may comprise, for a given image of the video flux comprising at least one of a face or a neck, segmenting at least one of a face or a neck of the person in the given image, and selecting the segmented part of the given image as corresponding to the subpart of the given image.

In some examples, the block 130 of tracking, in the video flux, hand landmarks may comprise a block 131 of selecting a subpart of images comprising a hand of the person in images Im of the video flux for obtaining a second plurality of subpart images Sim2 of the video flux. In some examples, selecting a subpart of an image comprising a hand of the person in images Im of the video flux may comprise, for a given image of the video flux comprising a hand, determining a bounding box comprising the hand in the given image, and selecting the bounding box of the given image as corresponding to the subpart of the given image. In some other examples, selecting a subpart of an image comprising a hand of the person in images Im of the video flux may comprise, for a given image of the video flux comprising a hand, segmenting a hand of the person in the given image, and selecting the segmented part of the given image as corresponding to the subpart of the given image.

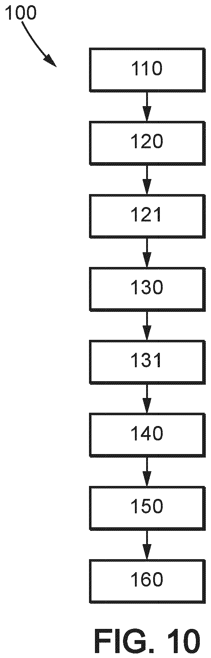

Examples of methods 100 comprising the blocks 121 and 131 are schematically illustrated in figure 10. In these examples, selecting the hand and at least one of a face or a neck in images Im of the video flux are performed by a first machine learning model MI,M1. The first machine learning model MI,M1 may therefore take as input images Im of the video flux and then outputs the first SIm1 and the second SIm2 plurality of subpart images of the video flux. The first machine learning model MI,M1 may correspond to a convolutional neural network (CNN), or to a transformer, for example a vision transformer (ViT).

In some examples, coordinates of face and/or neck landmarks may be determined based on a second machine learning model MLM2 taking as input the first plurality of subpart images SIm1. That is, an output of the first machine learning model (the first plurality of subpart images SIm 1) is an input of the second machine learning model MLM2 in order to determine coordinates of the face and/or neck landmarks. The second machine learning model MI,M2 may correspond to a convolutional neural network (CNN), or to a transformer, for example a vision transformer (ViT).

In some examples, coordinates of hand landmarks may be determined based on a third machine learning model MLM3 taking as input the second plurality of subpart images SIm2. That is, an output of the first machine learning model (the second plurality of subpart images SIm2) is an input of the third machine learning model MLM3 in order to determine coordinates of the hand landmarks. The third machine learning model MI,M3 may correspond to a convolutional neural network (CNN), or to a transformer, for example a vision transformer (ViT).

In some examples, at least one of the first MI,M1, the second MI,M2 or the third MLM3 machine learning models are trained using a database of images comprising at least one of:
- images comprising both a neck and a face of one or several persons;
- images comprising both a neck and a face of one or several persons, in which a part of at least one of the face or the neck is occulted by a hand of one or several persons;
- images of a hand of a person wherein at least a finger of the person is occulted by an element, especially by an object, a face, or by another finger of the hand;
- images of a hand of a person wherein a portion of the hand is cropped;
- images of a face of a person wherein a portion of the face is cropped.

Hence, the machine learning models are trained based on a database comprising images specifically adapted for the present solution.

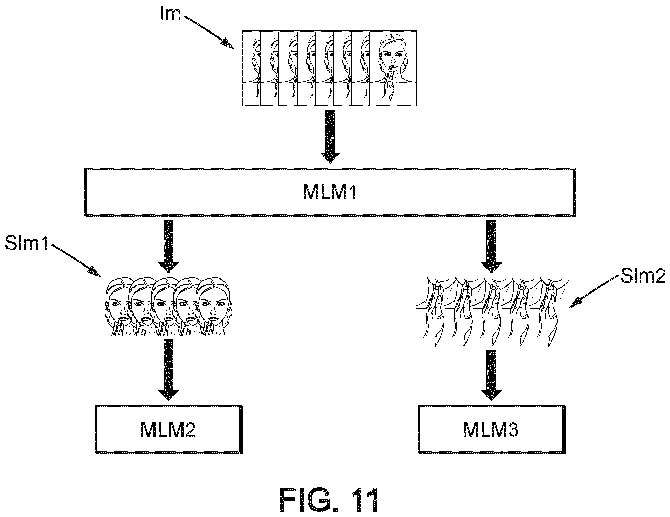

An example of architecture of a machine learning system comprising the first MLM1, second MI,M2 and third MLM3 machine learning models is illustrated in figure 11. As explained above, in these examples, images Im of the video flux are provided to the first machine learning model MLM1 which selects subpart of these images to determine the first SIm1 and second Sim2 plurality of subpart images. The first plurality of subpart images SIm1 is provided to the second machine learning model MI,M2 to determine at least one of face landmarks or neck landmarks while the second plurality of subpart images SIm2 is provided to the third machine learning model MLM3 to determine hand landmarks.

In some examples, the method may comprise a block 170 of determining an action based on an evolution of the position of the indicator IND in the video flux. The action may be defined to help the user to perform the massage action depending on the evolution of the position of the indicator in the video flux. In these examples, the memory 12 of the system 1 may comprise a plurality of actions and determining an action based on the evolution of the position of the indicator IND may comprise selecting an action among the plurality of actions based on the evolution of the position of the indicator.

In some examples, determining an action may for example comprise determining a message. The message may correspond to a written message or to an audio message. In these examples, the memory 12 of the system 1 may comprise a plurality of messages and determining an action based on the evolution of the position of the indicator IND may comprise selecting a message among the plurality of messages based on the evolution of the position of the indicator.

In some examples wherein a position of the indicator IND evolves at a speed greater than a third threshold, the action determined at block 170 may comprise determining a message indicating to slow down.

In some examples wherein a position of the indicator IND evolves at a speed lower than a fourth threshold, the action determined at block 170 may comprise determining a message indicating to speed up.

In some examples wherein the method 100 comprises the block 170, the method 100 may further comprise a block 180 of applying the action.

In some examples wherein the action determined at block 170 corresponds to a written message, the block 180 of applying the action may comprise generating the written message in images of the video flux.

In some examples wherein the action determined at block 170 corresponds to an audio message, the block 180 of applying the action may comprise playing the audio message. The system 1 may therefore be played by the audio system 15.

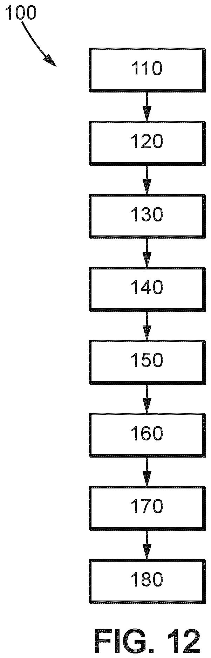

Examples of methods 100 comprising the blocks 170 and 180 are schematically illustrated in figure 12.

The present disclosure also presents a computer-readable storage medium comprising instructions which, when executed by at least one controller, cause the controller to carry out any one of the methods presented hereby.

The present disclosure also describes a computer program product comprising instructions which, when the program is executed by a computer, cause the computer to carry out any one of the methods hereby described.

The terms used herein are for the purpose of describing specific examples only and are not intended to limit the present disclosure. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, blocks, constitutional elements, components and/or combinations thereof, but do not preclude the presence or addition of one or more other features, integers, steps, operations, blocks, constitutional elements, components, and/or combinations thereof.

The various examples described above can be combined to provide further examples. These and other changes can be made to the examples in light of the above-detailed description. In general, in the following claims, the terms used should not be construed to limit the claims to the specific examples disclosed in the specification, but should be construed to include all possible examples along with the full scope of equivalents to which such claims are entitled.

The present disclosure therefore provides a solution using virtual information generated on a video flux of a person performing a massage for its real-time assistance. The solution of the present disclosure relies on generating a curve representing the trajectory to be performed by a hand of the person to perform a massage action and an indicator moving following a trajectory parallel to the curve depending on a position of the hands of the person, which therefore guides the gesture of the person when performing the massage action. Since the curve and the indicator may not be part of a superimposed 3D model, the need in terms of computing time is reduced compared to assistance based on superimposed 3D models, so that the present solution is particularly advantageous for real-time assistance.

## Claims

1. A computer-implemented method (100) for assisting a person to perform a massage action; the method comprising:
obtaining (110) a video flux having images (Im) comprising at least one of a face, a neck, or a hand of the person;
tracking (120), in the video flux, landmarks belonging to at least one of a face, named as face landmarks, or a neck, named as neck landmarks;
tracking (130), in the video flux, landmarks belonging to a hand, named as hand landmarks;
determining (140) points of a curve (C) corresponding to a trajectory to be performed by a hand of the person for the massage action, based on at least one of neck landmarks or face landmarks in the video flux;
determining (150) a position of an indicator (IND) in relation to the curve (C); wherein the position of the indicator (IND) evolves following a trajectory parallel to the curve (C) in the video flux based on a specific hand landmark (sHL) in the video flux; and
generating (160) the curve (C) and the indicator (IND) in the video flux.

2. The method of claim 1, wherein the method further comprises loading (102) a settings file associated to the massage action; the settings file comprising information regarding:
• coordinates of a starting point of the curve relative to a first landmark of a face or a neck;
• coordinates of an ending point of the curve relative to a second landmark of a face or a neck; and
• control points of the curve;
and wherein determining points of the curve (C) to be generated in images (Im) of the video flux comprises determining (141) coordinates of points of the curve in images (Im) of the video flux based on the information stored in the settings file and based on coordinates of at least one of neck landmarks or face landmarks.

3. The method according to claim 2, wherein the settings file also comprises an index value identifying the specific landmark of the hand in the video flux.

4. The method according to any one of the claims 1 to 3, wherein the position of the indicator following the trajectory parallel to the curve (C) evolves from a first position in a first image of the video flux to a second position in a second image of the video flux, successive to the first image, when a distance (d) between the specific hand landmark (sHL) and a point of the curve in the first image is less than a threshold.

5. The method according to any one of the claims 1 to 4, wherein tracking (120), in the video flux, at least one of face landmarks or neck landmarks comprises:
selecting (121) at least one of a face or a neck of the person in images (Im) of the video flux for obtaining a first plurality of subpart images (SIm1),
wherein tracking (130), in the video flux, hand landmarks comprises:
selecting (131) the hand of the person in images (Im) of the video flux for obtaining a second plurality of subpart images (SIm2); and
wherein selecting the hand (131) and at least one of a face or a neck (121) of the person in images (Im) of the video flux is performed by a first machine learning model (MLM1).

6. The method according to the previous claims, wherein coordinates of at least one of face landmarks or neck landmarks of the person are determined based on a second machine learning model (MI,M2) taking as input the first plurality of subpart images (SIm1); and wherein coordinates of hand landmarks of the person are determined based on a third machine learning model (MLM3) taking as input the second plurality of subpart images (SIm2).

7. The method according to the previous claim, wherein at least one of the first (MI,M1), the second (MLM2) or the third (MLM3) machine learning models are trained using a database of images comprising at least one of:
images comprising both a neck and a face of one or several persons;
images comprising both a neck and a face of one or several persons, in which a part of at least one of the face or the neck is occulted by a hand;
images of a hand of a person wherein at least a finger of the person is occulted by an element, especially by an object, by a face, or by another finger of the hand;
images of a hand of a person wherein a portion of the hand is cropped; and
images of a face of a person wherein a portion of the face is cropped.

8. A method according to any one of the claims 1 to 7, wherein the curve (C) corresponds to a Bezier curve.

9. A method according to any one of the claims 1 to 8, wherein the position of the indicator (IND) evolves by following the trajectory parallel to the curve (C) in the video flux in a direction corresponding to a direction of the massage action.

10. The method according to any one of the claims 1 to 9, wherein the method further comprises determining (151) a progress parameter (Pp) based on a position of the indicator; and displaying (161) the progress parameter (Pp) in the video flux.

11. The method according to any one of the claims 1 to 10, wherein tracking neck landmarks in the video flux comprises:
determining a neck landmark in a specific image of the video flux based on a symmetry operation applied on a face landmark in the specific image.

12. The method according to any one of the claims 1 to 11, further comprising determining (170) an action based on an evolution of the position of the indicator (IND) in the video flux.

13. A computer-readable storage medium comprising instructions which, when executed by a processor, cause the processor to carry out the method of any one of the claims 1 to 12.

14. A computer program product comprising instructions which, when the program is executed by a processor, cause the processor to carry out the method of any one of the claims 1 to 12.

15. A system (1) comprising a processor (11), a memory (12) and a camera (13), wherein the camera (13) is configured to acquire a video flux;
wherein the memory (12) is configured to store the acquired video flux; and
wherein the processor (11) is configured to implement a method according to any one of the claims 1 to 12.
